# DEMANDE DE BREVET EUROPEEN

(11) **EP 4 585 042 A1**
(43) Date de publication de la demande: **16.07.2025**
(21) Numéro de dépôt: 24151442.1
(22) Date de dépôt: 11.01.2024
(51) Int. Cl.: A01L 1/00, A01L 11/00

(54) **PROCÉDÉ DE MODÉLISATION ET DE FABRICATION D'UN FER À CHEVAL SUR MESURE ET FER À CHEVAL OBTENU SELON CE PROCÉDÉ**

(71) Demandeur: Maret, Cyril, 1263 Crassier (CH)
(72) Inventeur: MARET, Cyril, 1263 Crassier (CH); MARET, Philippe, 1196 Gland (CH)
(74) Mandataire: Omnis-IP

(57) **Abrégé**

La présente invention concerne un procédé de modélisation d'un fer à cheval sur mesure, ce procédé comportant les étapes de réception d'une image brute (19) comportant une vue de la face plantaire d'un sabot (16) de cheval, ainsi qu'une vue d'un repère (17) placé contre cette face plantaire du sabot; de traitement de l'image brute, ce traitement comportant les étapes de détection du repère sur l'image brute; de transformation de l'image brute de façon à la modifier pour que le repère ait une forme standardisée, l'image obtenue étant nommée image standardisée; de segmentation de l'image standardisée (20) de façon à délimiter le contour du sabot, l'image obtenue étant nommée image segmentée (21); et de détermination de coordonnées de points d'un ensemble de points (23) sur le contour du sabot. Le procédé comporte en outre une étape de choix d'un modèle (25) prédéfini de fer à cheval, ce modèle comportant un ensemble de paramètres ; d'adaptation des paramètres du modèle de fer à cheval choisi en fonction des coordonnées des points dudit ensemble de points; et de modélisation d'un fer à cheval sur la base des paramètres du modèle de fer à cheval choisi, adaptés selon les coordonnées des points dudit ensemble de points.

L'invention concerne en outre un procédé de fabrication d'un fer à cheval sur mesure et un fer à cheval sur mesure obtenu selon ce procédé de fabrication.

## Description

### DOMAINE TECHNIQUE

La présente invention concerne le domaine de la maréchalerie et particulièrement la réalisation de fers à cheval sur mesure.

Plus précisément, l'invention concerne un procédé de modélisation d'un fer à cheval sur mesure en vue de sa fabrication. Elle concerne également un procédé de fabrication d'un fer à cheval sur mesure ainsi qu'un fer à cheval obtenu selon ce procédé de fabrication.

### ART ANTÉRIEUR

Actuellement, lorsqu'un maréchal-ferrant doit ferrer un cheval, il doit notamment effectuer les étapes suivantes :
- parage des sabots : cette opération consiste à ajuster la longueur, la forme et l'angle du sabot pour assurer un support approprié au fer ;
- choix des fers : le maréchal-ferrant choisit des fers ayant une taille et une forme les plus appropriées en fonction de la morphologie du cheval et de son utilisation. Certains chevaux peuvent nécessiter des fers spéciaux, tels que notamment des fers antidérapants ou des fers orthopédiques. Sur les fers traditionnels, les contre-perçures, à savoir les extrémités des trous de clous dirigées vers la surface supérieure du fer, soit la surface appliquée contre la surface plantaire du sabot, sont usinées symétriquement sur le fer. Le choix des fers doit également prendre en compte la position des contre-perçures.
- façonnage des fers : le fer à cheval est ensuite ajusté sur une enclume à l'aide d'un marteau et d'une pince. Cela permet d'adapter le fer à la forme spécifique du sabot à ferrer ;
- adaptation de la position des trous des clous : la position des trous des clous doit être vérifiée et au besoin, de nouveaux trous doivent être percés pour assurer que les clous se trouvent dans la bonne position par rapport au sabot ;
- pose des fers : les fers sont ensuite fixés sur les sabots du cheval au moyen de clous. Les clous sont généralement inclinés vers l'extérieur de façon à ressortir du sabot.
- finitions : Le maréchal-ferrant peut lisser et polir les bords des fers pour éviter tout risque d'irritation ou de blessure pour le cheval. I peut également replier ou coupe la partie des clous qui dépasse du sabot.

Généralement, le maréchal-ferrant dispose d'un ensemble de modèles de fers, ayant des dimensions, des formes et des positions des contre-perçures différentes. Il choisit le modèle qui est le mieux adapté au cheval à ferrer, puis il l'ajuste par façonnage.

Les modèles de fers à cheval existants sont adaptés au plus grand nombre de chevaux. Ils peuvent difficilement être prévus pour des chevaux ayant des sabots de forme et/ou de dimension hors norme.

Les trous prévus pour placer les clous de maintien du fer au sabot sont placés dans une position prédéfinie qui dépend du modèle de fer. Certains types de fers ont des contre-perçures plus "à gras" (vers l'intérieur du fer) ou plus "à maigre" (vers l'extérieur du fer). Ainsi, en fonction de la morphologie et de la taille du sabot, le maréchal-ferrant choisit le modèle de fer le mieux adapté. La position de ces contre-perçures ne dépend pas de la forme spécifique du sabot sur lequel le fer doit être placé. L'épaisseur de la corne du sabot, nommée ligne blanche, dans laquelle les clous doivent être plantés est très faible, de l'ordre de 5 mm environ. La ligne blanche se trouve au bord du sabot, généralement entre 6 mm et 15 mm. Cette distance dépend de la forme du sabot, de sa grandeur, de la race et du cheval particulier à ferrer. Il est primordial que les clous se trouvent dans cette ligne blanche. En effet, un clou placé trop à l'extérieur ne permettra pas de maintenir efficacement le fer. Un clou placé en deçà de la ligne blanche peut blesser le cheval.

Le maréchal-ferrant doit forger le fer à chaud pour obtenir la bonne forme par rapport au sabot et donc la bonne garniture. Il arrive fréquemment que les contre-perçures du fer ne soient pas adaptées à la ligne blanche du sabot. Une intervention manuelle du maréchal-ferrant est alors nécessaire pour repercer les trous afin que les clous soient dans la ligne blanche.

Aujourd'hui, il peut être difficile voire impossible d'ajuster un fer existant pour que non seulement sa forme générale soit adaptée au sabot spécifique sur lequel il doit être posé, mais que la position des trous des clous soit également adaptée à la ligne blanche. Pour une fixation correcte du fer, il est donc souvent nécessaire de percer des trous après que le fer ait été formé pour être adapté au sabot à ferrer.

De plus, il peut être difficile d'adapter des fers pour des chevaux ayant des sabots hors de la moyenne ou pour des chevaux nécessitant des fers particuliers, par exemple pour des questions orthopédique ou autres.

Il serait donc avantageux de pouvoir réaliser des fers à cheval sur mesure, à savoir des fers adaptés à la morphologie du sabot sur lequel ils doivent être placés. Les fers devraient également être adaptés pour pouvoir être fixés de façon correcte, à savoir que les trous des clous se trouvent en regard de la ligne blanche.

Les fers à cheval existants peuvent avoir généralement entre 0 et 3 pinçons, le plus souvent 1 ou 2. Dans le cas de fers à cheval avec au moins un pinçon, ces pinçons sont placés de façon à être en appui contre la paroi du sabot, sur toute la hauteur du pinçon.

L'angle entre la face plantaire du sabot et la paroi varie selon la position prévue pour le pinçon et selon le sabot spécifique à ferrer. Dans les modèles de fers actuels, les pinçons peuvent avoir une position prédéterminée qui est généralement soit coplanaire au reste du fer, soit perpendiculaire au fer. En pratique, ces pinçons doivent être positionnés contre la paroi du sabot lors du façonnage des fers.

Le maréchal-ferrant doit donc forger le fer selon la forme du sabot à ferrer et positionner les pinçons selon les angles de la paroi du sabot tout en essayant de positionner les contre-perçures en regard de la ligne blanche. Ceci demande un savoir-faire et une habileté particulière, mais même dans ce cas, il arrive fréquemment qu'une intervention spécifique sur les trous des clous soit nécessaire.

Le fait d'utiliser un fer à cheval adapté au sabot auquel il doit être fixé permet un gain de temps. En effet, il n'est pas nécessaire de façonner le fer sur place, ce dernier étant déjà adapté au sabot. Ce gain de temps rend également le ferrage du cheval moins pénible physiquement et peut également être avantageux pour des chevaux difficiles à ferrer comme des chevaux nerveux ou des chevaux présentant des douleurs telles que de l'arthrose par exemple.

Certaines tentatives ont été réalisées en vue d'atteindre les objectifs mentionnés ci-dessus. Une tentative est en particulier décrite dans le brevet EP 0 545 961. Ce document décrit un procédé pour réaliser un fer à cheval sur mesure, en particulier pour tenir compte de pathologies du pied du cheval.

Le procédé décrit dans ce document comporte les étapes suivantes :
- une photo du sabot du cheval est prise ;
- un modèle de fer à cheval est choisi ;
- une image est produite, cette image comprenant d'une part une courbe représentant le fer à cheval choisi et d'autre part une courbe représentant le contour du sabot du cheval ;
- l'utilisateur déplace la courbe représentant le fer à cheval sur un écran tactile, de façon à l'adapter à la forme du sabot du cheval.

Lorsque l'utilisateur a déterminé la courbe qu'il souhaite utiliser, il transmet cette courbe à un fabricant qui usine le fer à cheval selon la courbe considérée.

Ce procédé comporte un certain nombre de défauts. En particulier, la prise de vue doit se faire dans des conditions particulières pour que la courbe représentant le contour du sabot soit utilisable par rapport à la courbe du fer à cheval. Ces conditions sont notamment que l'appareil de prise de vue doit être perpendiculaire au plan défini par la face plantaire du sabot, à une distance prédéfinie de cette face. Une erreur de perpendicularité entraîne une erreur sur la courbe et donc une erreur lors de la fabrication du fer. En pratique, il peut toutefois être relativement difficile de respecter ces conditions de perpendicularité et de distance, du fait que la patte du cheval doit être tenue, mais peut bouger.

Un autre inconvénient est le fait que l'utilisateur doive agir manuellement sur la courbe du fer. Ceci implique d'éventuelles erreurs de manipulation et nécessite un certain savoir-faire.

Un autre inconvénient vient du fait que les points tels que déterminés par la courbe représentant la forme du sabot du cheval ne sont utilisés que pour déterminer le contour du fer, sans être utilisés pour d'autres paramètres de ce fer. La courbe se situe dans un plan, alors que le fer à cheval devrait pouvoir être adapté selon un volume ou des courbes en trois dimensions. De ce fait, le fer à cheval peut avoir un contour adapté au sabot du cheval, mais peut ne pas être adapté en ce qui concerne les autres paramètres du fer. La position des contre-perçures n'est pas prise en compte et il est nécessaire de vérifier l'adéquation entre la position de ces contre-perçures et du sabot du cheval. Une intervention manuelle sur les trous des clous peut être ncéessaire.

Il existe donc un besoin pour développer un procédé permettant de réaliser un fer à cheval qui soit réellement adapté au sabot du cheval auquel il est destiné, et qui soit simple à utiliser, tout en évitant les risques d'erreur.

### DESCRIPTION DE L'INVENTION

La présente invention concerne un procédé permettant de réaliser des fers à cheval sur mesure de façon simple pour l'utilisateur. En particulier, certaines contraintes des systèmes de l'art antérieur ont été supprimées. A titre d'exemple, en cas de prise d'une photo d'un sabot d'un cheval, il n'est pas nécessaire de prendre des précautions particulières pour que la photo soit utilisable.

Il n'est pas nécessaire pour l'utilisateur d'ajuster une courbe d'un fer à cheval sur l'image d'un sabot de cheval. Ceci évite d'une part d'éventuelles erreurs et d'autre part, cela permet un gain de temps. Cela évite en outre des interprétations différentes entre deux maréchaux-ferrants qui pourraient être amenés à ferrer le même cheval, à partir du même modèle de fer, tout en obtenant des fers différents.

Le précédé de l'invention permet en outre d'obtenir des fers ajustés non-seulement dans un plan, mais dans un espace à trois dimensions.

Le procédé de l'invention permet en outre de réaliser des fers dans lesquels les trous des clous sont toujours positionnés dans un emplacement qui permet de garantir que les clous se trouveront dans la ligne blanche lorsque le fer sera mis en place. Ceci est important d'une part pour assurer un bon maintien du fer sur le sabot et d'autre part, pour garantir que le cheval ne sera pas blessé lors de la pose du fer.

Les fers obtenus au moyen du procédé de l'invention peuvent également avoir un ou des pinçons dont les angles sont adaptés à l'angle du sabot auquel le fer est destiné.

De façon plus détaillée, l'invention concerne un procédé de modélisation d'un fer à cheval sur mesure tel que défini en préambule, ce procédé étant caractérisé en ce qu'il comporte les étapes suivantes :
- réception d'une image brute comportant une vue de la face plantaire d'un sabot de cheval auquel le fer à cheval sur mesure est destiné, ainsi qu'une vue d'un repère placé contre cette face plantaire du sabot;
- traitement de l'image brute, ce traitement comportant les étapes suivantes :
   - détection du repère sur l'image brute ;
   - transformation de l'image brute de façon à la modifier pour que le repère ait une forme standardisée, l'image obtenue étant nommée image standardisée ;
   - segmentation de l'image standardisée de façon à délimiter le contour du sabot, l'image obtenue étant nommée image segmentée ;
   - détermination de coordonnées de points d'un ensemble de points sur une courbe formant le contour du sabot ;
- choix d'un modèle prédéfini de fer à cheval, ce modèle comportant un ensemble de paramètres ;
- adaptation des paramètres du modèle de fer à cheval choisi en fonction des coordonnées des points dudit ensemble de points ;
- modélisation d'un fer à cheval sur la base des paramètres du modèle de fer à cheval choisi, adaptés selon les coordonnées des points dudit ensemble de points.

L'invention concerne en outre un procédé de fabrication d'un fer à cheval sur mesure tel que défini en préambule, ce procédé étant caractérisé en ce qu'il comporte les étapes suivantes :
- réception d'une image brute comportant une vue de la face plantaire d'un sabot de cheval auquel le fer à cheval sur mesure est destiné, ainsi qu'une vue d'un repère placé contre cette face plantaire du sabot;
- traitement de l'image brute, ce traitement comportant les étapes suivantes :
   - détection du repère sur l'image brute ;
   - transformation de l'image brute de façon à la modifier pour que le repère ait une forme standardisée, l'image obtenue étant nommée image standardisée ;
   - segmentation de l'image standardisée de façon à délimiter le contour du sabot, l'image obtenue étant nommée image segmentée;
   - détermination de coordonnées de points d'un ensemble de points sur le contour du sabot ;
- choix d'un modèle prédéfini de fer à cheval, ce modèle comportant un ensemble de paramètres ;
- adaptation des paramètres du modèle de fer à cheval choisi en fonction des coordonnées des points dudit ensemble de points ;
- modélisation d'un fer à cheval sur la base des paramètres du modèle de fer à cheval choisi, adaptés selon les coordonnées des points dudit ensemble de points ;
- fabrication d'un fer à cheval selon la modélisation.

L'invention concerne outre un fer à cheval obtenu par la mise en oeuvre du procédé de fabrication tel que défini ci-dessus.

Le procédé de fabrication de l'invention permet de réaliser des fers à cheval dans un grand nombre de matériaux différents, y compris dans des matériaux qui ne sont pas compatibles avec un façonnage conventionnel à chaud. Ces matériaux peuvent par exemple être des matériaux composites ou des matériaux formés de plusieurs couches de matières différentes, incluant du métal, des matières plastiques, du bois, etc.

Les fers à cheval peuvent également être réalisés pour des animaux « hors norme », particulièrement grands, particulièrement petits ou ayant des sabots présentant notamment une partie cassée ou des blessures.

Après leur fabrication, ces sabots peuvent être posés rapidement puisqu'ils n'ont en principe pas besoin d'être façonnés ou ajustés au sabot. Les trous prévus pour les clous se trouvent nécessairement dans un emplacement adéquat. Le temps de pose des fers s'en trouve donc fortement réduit, de même que la pénibilité du travail et le confort du cheval.

### BRÈVE DESCRIPTION DES DESSINS

La présente invention et ses avantages seront mieux compris en référence aux figures annexées et à la description détaillée d'un mode de réalisation particulier, dans lesquelles :
- la figure 1 est une vue schématique d'un procédé de fabrication d'un fer à cheval sur mesure selon la présente invention ;
- la figure 2 est une image brute telle qu'utilisée dans les procédés de l'invention ;
- la figure 3 est une vue d'une image standardisée tel qu'utilisée dans les procédés de l'invention ;
- la figure 4 représente une image segmentée ou détourée de la face plantaire d'un sabot d'un cheval tel qu'obtenue à partir de l'image standardisée ;
- la figure 5 est une vue du sabot de la figure 4 sur laquelle une courbe formant son contour a été déterminé ;
- la figure 6 illustre la courbe formant le contour du sabot des figures 4 et 5 ;
- la figure 7 représente des points spécifiques sur la courbe de la figure 6 ;
- la figure 8 est une vue schématique d'un exemple de modèle prédéfini de fer à cheval tel qu'il peut être utilisé dans les procédés de l'invention ; et
- la figure 9 est une vue schématique du modèle de fer à cheval de la figure 8, adapté à la courbe de la figure 7 et formant un modèle de fer à cheval sur mesure selon l'invention.

### MODE DE REALISATION DE L'INVENTION

Comme indiqué précédemment, l'invention concerne notamment un procédé de modélisation d'un fer à cheval sur mesure et un procédé de fabrication d'un fer à cheval sur mesure. Le procédé de fabrication du fer à cheval comprend essentiellement les étapes du procédé de modélisation et comporte en outre une ou plusieurs étapes permettant la réalisation d'un fer à cheval sur la base du modèle qui a été conçu au moyen du procédé de modélisation de l'invention.

Lorsqu'il est mentionné « le procédé » de l'invention sans précision supplémentaire, ce procédé peut concerner aussi bien le procédé de modélisation que le procédé de fabrication.

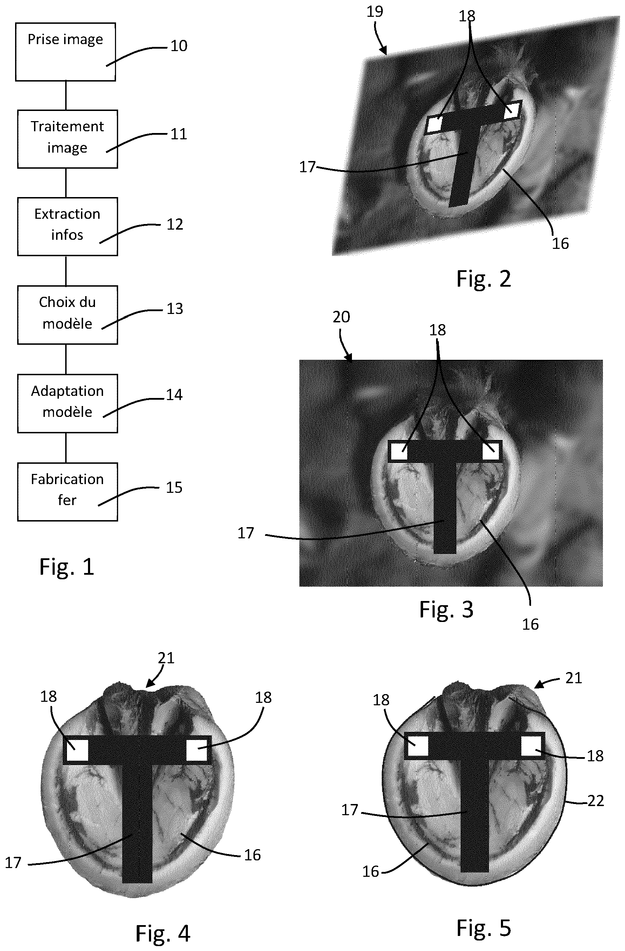

En référence à la figure 1, le procédé de modélisation de l'invention comporte, de façon très succincte, une étape 10 de prise d'une image d'un sabot de cheval sur lequel un fer à cheval sur mesure doit être posé, une étape 11 de traitement de cette image, une étape 12 d'extraction d'informations à partir de l'image traitée, une étape 13 de choix d'un modèle de fer à cheval parmi un ensemble de modèles de fers à cheval disponibles et une étape 14 d'adaptation du modèle en fonction des informations obtenues à partir de l'image traitée. Le procédé de fabrication comporte en outre une étape 15 de fabrication du fer à cheval sur la base du modèle obtenu. Chacune de ces étapes est détaillée ci-dessous.

### Prise d'une image d'un sabot de cheval

L'étape de prise de vue porte la référence 10 sur la figure 1. Lorsque le sabot 16 est paré en vue de réaliser un fer sur mesure pour ce sabot, la jambe du cheval est soulevée de façon à ce que la face plantaire du sabot soit visible. Un repère 17 est placé contre le sabot 16 du cheval au moment de la prise de vue, de façon que ce repère figure en entier sur la prise de vue.

La prise de vue est effectuée de façon que la totalité de la face plantaire du sabot 16 du cheval figure sur la vue, de même que le repère 17 dans son intégralité. Ceci est illustré par la figure 2. Il est à noter que l'appareil de prise de vues peut être un appareil photo conventionnel ou un appareil photo d'un téléphone portable en particulier.

Dans un mode de réalisation avantageux, le repère 17 comporte deux éléments distinctifs 18 qui peuvent être réalisés sous la forme de figures géométriques, d'une couleur nettement différente de la couleur d'un sabot de cheval. A titre d'exemple, le repère 17 peut être formé d'une réglette aux extrémités de laquelle figurent deux carrés rouges ou blanc par exemple, ayant des côtés de longueur connue et un entraxe connu.

Contrairement aux procédés de l'art antérieur, la prise de vue peut être réalisée sans que l'appareil de prise de vues ne soit perpendiculaire à la face planaire du sabot ou qu'il soit à une distance déterminée et fixe par rapport au sabot. Cette prise de vue peut être réalisée avec relativement peu de précautions. Un traitement efficace de l'image sera toutefois possible en particulier si la lumière offre un contraste suffisant entre le repère et le sabot, si la totalité de la face planaire du sabot 16 et du repère 17 figurent sur l'image et si les éléments distinctifs 18 du repère sont clairement distinguables sur l'image.

Le procédé de l'invention peut comporter une étape de vérification de la qualité de l'image, en particulier de son contraste et de sa netteté. Un avertissement peut être affiché à l'attention de l'utilisateur sur l'appareil de prise de vues dans le cas où la qualité de l'image n'est pas suffisante pour pouvoir être utilisée efficacement. Il est également possible de prévoir par exemple un affichage vert si la qualité de l'image est correcte et un affichage rouge dans le cas contraire. L'image obtenue lors de cette étape de prise de vue est nommée « image brute » 19.

### Traitement d'image

Lorsqu'une image brute utilisable, c'est-à-dire une image ayant les caractéristiques mentionnées ci-dessus est disponible, elle peut être traitée. Cette étape de traitement d'image porte la référence 11 sur la figure 1. Le traitement comprend les étapes suivantes.

Tout d'abord, les éléments distinctifs 18 du repère 17 sont détectés, en particulier grâce à leur couleur différente des couleurs du reste de l'image. Une homomorphie est ensuite appliquée à l'image, cette homomorphie étant telle que les éléments distinctifs 18 du repère sont transformés d'une façon à obtenir une image prédéfinie de ces éléments distinctifs. Plus précisément, dans un mode de réalisation spécifique, les figures géométriques formant les éléments distinctifs 18 du repère sont des carrés blancs de dimension connue et d'entraxe connu. Lors de la prise de vue, les carrés sont généralement déformés comme cela est visible sur la figure 2. L'homomorphie appliquée à l'image brute a pour but de transformer les carrés tels qu'ils apparaissent sur cette image brute en véritables carrés et à fixer l'entraxe à une valeur prédéfinie. L'image obtenue par la transformation par homomorphie de l'image brute est nommée « image standardisée » 20.

A titre d'exemple, l'homomorphie pourrait avoir pour effet de transformer les carrés du repère 17 tels qu'ils apparaissent sur l'image brute 19 en carrés ayant par exemple 80 pixels de côtés, séparés l'un de l'autre par 500 pixels sur l'image standardisée 20.

Il est un outre possible d'imposer une position précise des carrés dans l'image standardisée, les carrés étant par exemple à 80 pixels du bord supérieur de l'image et l'un des carrés étant à 80 pixels du bord gauche de cette image.

La même homomorphie qui a été appliquée au repère 17 est également appliquée au reste de l'image, de sorte que l'image du sabot du cheval est également transformée. L'image standardisée 20 obtenue est illustrée par la figure 3.

De façon plus générale, l'homomorphie est définie comme une translation algébrique. L'homomorphie appliquée à l'image brute est une translation de points caractéristiques du repère vers une position définie de l'image standardisée. Cette homomorphie est ensuite appliquée à chaque pixel de l'image brute.

En pratique, les éléments distinctifs 18 du repère 17 comportent des points caractéristiques tels que des coins des carrés formant ces éléments distinctifs. Ces points caractéristiques sont utilisés pour déterminer l'homomorphie à utiliser pour une image spécifique. Pour pouvoir déterminer une homomorphie de façon univoque, au moins quatre points caractéristiques non alignés doivent être utilisés.

L'image standardisée est ensuite traitée de façon à déterminer le contour du sabot 16. Pour ceci, plusieurs solutions sont envisageables. L'une des solutions consiste à utiliser une librairie open-source tel que SAM (Segment Anything Model) ou un logiciel de segmentation d'images qui permet de délimiter le contour du sabot du cheval par rapport aux éléments extérieurs au sabot.

Cette segmentation peut être faite grâce au repère 17. En effet, une telle librairie ou un tel logiciel de segmentation est capable de « reconnaître » des objets dans une image. Toutefois, pour qu'un objet spécifique puisse être reconnu, il est nécessaire d'indiquer au logiciel un certain nombre de points sur l'image, qui font partie de l'objet à reconnaître. De par la manière d'effectuer la prise de vue, la partie de l'image qui se trouve à proximité ou sous le repère 17 fait toujours partie du sabot. Ainsi, comme le repère se trouve toujours dans la même position sur l'image, il est possible de définir des zones de l'image standardisée qui appartiennent toujours à l'image du sabot, quelle que soit la taille et la forme du sabot. Ces zones-là peuvent être utilisées comme données d'entrée pour une librairie telle que SAM ou un logiciel de segmentation d'image. Ainsi, pour autant que l'image ait été prise dans les conditions décrites ci-dessus, il est toujours possible d'extraire l'image du sabot de l'image standardisée 20.

L'image obtenue suite à cette étape de segmentation est dénommée « image segmentée » 21. L'image segmentée est illustrée par la figure 4.

Une courbe 22 représentative du bord du sabot 16 est ensuite générée à partir de l'image segmentée 21. Ceci est réalisé par détection de l'image du contour du masque du sabot obtenue à la suite de l'étape de segmentation.

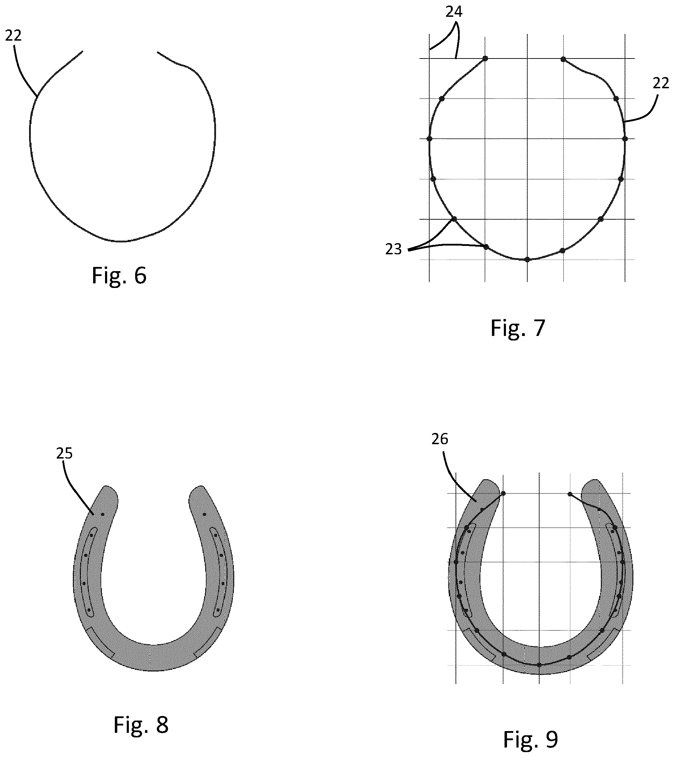

Le sabot 16 et la courbe 22 représentative de son contour sont illustrés par la figure 5. La courbe 22 seule sans le sabot est représentée par la figure 6.

### Extraction d'informations à partir de l'image traitée

La courbe 22 représentative du contour du sabot est ensuite traitée de façon à en extraire des coordonnées de points 23. Cette étape porte la référence 12 sur la figure 1. Différente manières d'extraire les coordonnées des points peuvent être envisagées. En particulier, il est possible de définir un ensemble de lignes parallèles et perpendiculaire entre elles, équidistantes ou non, de façon à former une grille 24, puis de déterminer les coordonnées des points d'intersection entre la courbe du sabot et la grille.

Une autre manière d'extraire les coordonnées des points 23 de la courbe 22 est décrite ci-dessous.

Des points spécifiques de la courbe sont déterminés. Ces points peuvent être des points extrêmes tels que les points les plus haut, le plus bas, le plus à gauche et le plus à droite de la courbe. Ces points peuvent être des points reconnaissables tels que les talons. Dans le cas de l'utilisation des talons, deux points définissant les talons sont placés automatiquement par traitement de l'image. Ces points peuvent également être indiqués manuellement par un utilisateur sur un écran tactile. Ces deux point sont utilisés pour couper la courbe du sabot en deux segment. Le segment le plus long définit la courbe extérieur du sabot, le segment le plus court étant la courbe intérieure. Une fois ces courbes obtenues en se basant sur leur longueur, des point sont placés à équidistance le long de ces courbes. Ces points sont les points caractéristique 23 de la courbe du sabot.

Il est également possible de déterminer des points particuliers de la courbe, comme notamment d'autres points extrêmes dans le sens de la hauteur et/ou de la largeur du sabot du cheval, ainsi que des points intermédiaires entre ces points extrêmes.

Le nombre de points choisis est tel que la courbe peut être définie de façon relativement précise, sans que ce nombre de points ne soit trop important. A titre d'exemple, les coordonnées de 7 à 15 points sont suffisantes pour obtenir une bonne image du contour du sabot. Selon une variante, il est possible que l'utilisateur choisisse le nombre de points de la courbe ou d'une zone spécifique de la courbe. Ceci peut présenter un intérêt par exemple dans le cas où le sabot présente une anomalie telle qu'une partie cassée.

La courbe 22 représentative du contour du sabot et les points 23 de cette courbe sont illustrés par la figure 7.

Il est à noter qu'à ce stade, les points 23 utilisés pour modéliser la courbe 22 sont tous coplanaires. Ces points seront toutefois utilisés pour déterminer certains paramètres du fer dans un espace à trois dimensions.

### Choix d'un modèle de fer

Parallèlement au traitement d'images et aux autres étapes décrites ci-dessus, le procédé de l'invention comprend une étape de choix d'un modèle 25 de fer à cheval.

Cette étape porte la référence 13 sur la figure 1. Ce modèle 25 est choisi parmi une bibliothèque de modèles existants. Ces modèles sont caractérisés par un ensemble de paramètres qui peuvent être notamment le type de fer (fer classique, fer couvert, fer ovale, ...), le nombre de pinçons, la largeur, l'épaisseur, la hauteur, l'ajusture, la rive, le rolling, ...

Le modèle peut également comporter des paramètres relatifs à la position des trous pour les clous, à leur inclinaison, à leur nombre, etc.

Ce choix peut être fait selon les habitudes du maréchal ferrant, les habitudes du cheval, une morphologie particulière des sabots, les activités spécifiques du cheval, etc.

Un exemple de modèle 25 de fer à cheval à deux pinçons est illustré de façon schématique par la figure 8.

### Modélisation d'un fer à partir des informations et du modèle

L'étape suivante du procédé de modélisation porte la référence 14 sur la figure 1. Elle consiste à modifier le modèle 25 choisi dans la bibliothèque de modèles prédéfinis de façon à obtenir un fer 26 spécifiquement adapté au sabot du cheval auquel il est destiné. A cet effet, les coordonnées des points 23 obtenues lors de l'étape 12 d'extraction d'informations à partir de l'image segmentée 21 sont utilisées.

Les paramètres caractérisant le modèle de fer choisi peuvent être modifiés en fonction des coordonnées des points spécifiques au sabot du cheval. A titre d'exemple, les coordonnées des points peuvent être utilisées pour définir la position des pinçons ou le point de rotation du fer notamment.

De manière similaire, le modèle prédéfini comprend une garniture paramétrable. La taille de cette garniture peut en particulier dépendre de la longueur et de la largeur du sabot. Cette garniture est donc adaptée au sabot spécifique du cheval. Par ailleurs, en connaissant la garniture spécifique et les coordonnées des points représentatifs du sabot, il est possible de définir un biseau et de réaliser ainsi une garniture biseauté.

De cette manière, les coordonnées « planaires » de certains points de la courbe 22 sont utilisées pour définir une forme en trois dimensions et agir sur cette troisième dimension.

Les paramètres définissant le modèle de fer choisi sont ainsi adaptés en fonction du sabot spécifique du cheval. De façon surprenante, bien que les points de la courbe soient disposés dans un même plan, l'application de ces points sur un modèle permet de définir une forme tridimensionnelle. En particulier, le biseautage de la garniture, le rolling, la position des pinçons, le plan du fer par rapport au plan du sabot et d'autres paramètres liés à un espace à trois dimensions peuvent être définis grâce aux coordonnées à deux dimensions des ponts de l'ensemble de points de la courbe.

De manière similaire, la position des trous pour les clous, telle que définie par le modèle choisi peut être adaptée à la forme spécifique du sabot du cheval. A cet effet, la courbe 22 du sabot est utilisée pour le positionnement optimal des trous des clous. La ligne blanche a la même forme que le sabot. Déterminer le contour du sabot permet ainsi de déterminer la forme de la ligne blanche. Par ailleurs, l'épaisseur de cette ligne blanche a une proportion fixe et définie par rapport aux dimensions du sabot. En déterminant le contour du sabot et ses dimensions, il est possible de déterminer la position et la largeur de la ligne blanche et ainsi, de positionner les trous des clous et en particulier, les contre-perçures.

Selon une variante avantageuse, il est possible de mesurer l'angle entre le plan du sabot et une ou plusieurs zones du sabot. Une zone peut être le plan frontal ou dorsal du sabot. D'autres zones peuvent être le plan sagittal, par exemple dans la zone la plus large du sabot ou entre la zone la plus large et l'avant du sabot. Ces données d'angle peuvent être intégrées dans le modèle pour définir une inclinaison des trous des clous dans le fer. En connaissant en particulier la position des contre-perçures, l'inclinaison des trous des clous et l'épaisseur du fer, il est possible de déterminer la position des étampures.

Cette variante n'est toutefois pas indispensable et il est possible de prévoir des trous perpendiculaires au plan du fer ou inclinés selon un angle défini qui ne dépend pas spécifiquement d'un angle mesuré sur le sabot du cheval.

La mesure des angles du sabot peut également être utilisée pour déterminer l'inclinaison du ou des pinçons.

A l'issue de la modélisation, le fer 26 tel que modélisé est totalement adapté au sabot du cheval. A ce titre, il est à noter qu'il est possible de tenir compte d'une anomalie du sabot du cheval ou de spécification particulières pour le sabot en question. Il est également possible de réaliser des fers pour des sabots « hors norme », particulièrement petits ou grands ou ayant de formes inhabituelles.

Selon une variante, le modèle de fer à cheval, adapté à la courbe spécifique du sabot à ferrer, est affichée sur un écran, superposé à la courbe et/ou à l'image standardisé de la face plantaire du sabot. Bien que cette visualisation ne soit pas indispensable, elle permet à l'utilisateur de vérifier visuellement que le fer est bien adapté au sabot et à la courbe déterminée.

### Fabrication du fer à cheval

Sur la base du modèle obtenu lors de l'étape précédente, le fer à cheval 26 peut être fabriqué. Cette étape de fabrication porte la référence 15 sur la figure 1.

En connaissant le lien entre les dimensions réelles du repère 17 et ses dimensions sur l'image standardisée 20, et en disposant des coordonnées des points 23 de l'ensemble de points de la courbe représentative du sabot du cheval, il est possible de connaître les dimensions réelles du fer à cheval à fabriquer.

La fabrication peut se faire de différentes manières comme par exemple par usinage tel que notamment par fraisage à partir d'un bloc de matière brute, par usinage à partir d'une préforme, par fabrication additive ou autre, ou par une combinaison de différents modes de fabrication.

Cette fabrication tient compte des différents paramètres du modèle 25 prédéfini et du modèle spécifique au sabot à ferrer et permet de réaliser un fer monobloc comprenant notamment un ou plusieurs pinçons qui peuvent être réalisés dans la même pièce que le reste du fer. Selon une variante, ces pinçons peuvent avoir une inclinaison adaptée au sabot spécifique du cheval à ferrer. Certains fers existants ont des pinçons indépendants du reste du fer, qui sont fixés à ce fer notamment par des vis. Cette fabrication indépendante nécessite une fixation qui peut être relativement fragile.

De manière similaire, les contre-perçures peuvent être réalisées de façon à assurer un positionnement correct des clous lors de la pose des fers. Les trous pour les clous peuvent en outre avoir l'inclinaison souhaitée, sans que le maréchal-ferrant ne doive effectuer un perçage particulier ou une reprise manuelle lors de la pose du fer.

Les fer de l'invention peuvent être réalisés dans une matière conventionnelle telle que de l'acier. Ils peuvent également être réalisés dans des matières difficiles à forger telles que l'aluminium ou d'autres alliages utilisés pour leurs propriétés telles que la légèreté, leur souplesse, leur résistance ou pour d'autres propriétés intéressantes. Le procédé de fabrication selon l'invention peut en outre être utilisé pour fabriquer des fers « multicouches », les couches étant par exemple adaptées spécifiquement aux usage du fer, à certaines pathologies du cheval, à certaines caractéristiques recherchées, notamment des caractéristiques de résistance mécanique, d'élasticité, d'adhérence, etc. Un tel fer peut par exemple comporter une première matière en contact avec le sabot, ayant certaines propriétés, et une deuxième matière en contact avec le sol, ayant par exemple des propriétés de résistance à l'usure, des propriétés antidérapantes ou autres. Il est également possible de réaliser des fers ayant une ou plusieurs couches intermédiaires, présentant par exemple des propriété mécaniques intéressantes. Les matières utilisables sont très variées et peuvent comporter des métaux, des alliages, des matières synthétiques telles que des polymères, des matières naturelles telles que du bois, une combinaison de ces différentes matières, etc.,

Le procédé de modélisation de l'invention est intéressant pour plusieurs raisons. D'une part, il est particulièrement simple à manipuler pour un utilisateur puisqu'il permet de réaliser des prises de vue sans précaution particulière. Malgré ce manque de précautions, les points représentatifs du sabot peuvent être déterminés de façon précise. Ces points, qui appartiennent tous à un même plan peuvent être utilisés pour réaliser une forme tridimensionnelle. Le procédé permet en outre de choisir parmi des modèles préexistants, mais permet également de définir des modèles spécifiques par exemple à un utilisateur, à un type de cheval ou à un cheval particulier.

La position des trous des clous peut être adaptée à la morphologie spécifique du cheval à ferrer, de façon à assurer une fixation optimale du fer, sans risquer de blesser le cheval.

Il est à noter que l'étape de prise d'images et les étapes de modélisation ne sont pas nécessairement effectuées immédiatement les unes à la suite des autres. Il est en effet possible de prendre des images de plusieurs sabots de chevaux différents et de stocker ces images dans une mémoire. Ces images peuvent ensuite être ressorties de la mémoire pour être utilisées dans le cadre de la modélisation ou de la fabrication.

Il est à noter également que toutes les étapes des procédés de l'invention ne sont généralement pas réalisées par une seule et unique entité. L'étape de prise de vue peut être réalisée par un propriétaire de chevaux par exemple. L'étape de choix du modèle peut être réalisée par un maréchal-ferrant et l'étape de fabrication peut être réalisée par un atelier mécanique par exemple.

Les fers ainsi obtenus sont adaptés aux sabots à ferrer. Ceci assure un confort pour le cheval et simplifie grandement la pose des fers. En effet, il n'est plus nécessaire de forger ces fers sur place. La pénibilité du travail s'en trouve diminuée.

## Revendications

1. Procédé de modélisation d'un fer à cheval sur mesure en vue de sa fabrication, ce procédé étant **caractérisé en ce qu'**il comporte les étapes suivantes :
- réception d'une image brute (19) comportant une vue de la face plantaire d'un sabot (16) de cheval auquel le fer à cheval (26) sur mesure est destiné, ainsi qu'une vue d'un repère (17) placé contre cette face plantaire du sabot (16);
- traitement de l'image brute (19), ce traitement comportant les étapes suivantes :
• détection du repère (17) sur l'image brute (19) ;
• transformation de l'image brute (19) de façon à la modifier pour que le repère (17) ait une forme standardisée, l'image obtenue étant nommée image standardisée (20) ;
• segmentation de l'image standardisée (20) de façon à délimiter le contour du sabot (16), l'image obtenue étant nommée image segmentée (21) ;
• détermination de coordonnées de points d'un ensemble de points (23) sur une courbe (22) formant le contour du sabot ;
- choix d'un modèle (25) prédéfini de fer à cheval, ce modèle (25) comportant un ensemble de paramètres ;
- adaptation des paramètres du modèle (25) de fer à cheval choisi en fonction des coordonnées des points dudit ensemble de points (23) ;
- modélisation d'un fer à cheval (26) sur la base des paramètres du modèle (25) de fer à cheval choisi, adaptés selon les coordonnées des points dudit ensemble de points (23).

2. Procédé de modélisation d'un fer à cheval selon la revendication 1, **caractérisé en ce qu'**il comporte, avant l'étape de réception de l'image brute (19), une étape de mise en place du repère (17) contre la face plantaire du sabot (16) d'un cheval auquel est destiné le fer à cheval et une étape d'enregistrement d'une image comportant ledit repère (17) et ladite face plantaire du sabot (16), de manière à obtenir ladite image brute (19).

3. Procédé de modélisation d'un fer à cheval selon la revendication 1 ou 2, dans lequel le repère (17) comporte au moins un élément distinctif (18) agencé pour pouvoir être distingué de façon automatique du sabot 16 du cheval sur l'image brute (19).

4. Procédé de modélisation d'un fer à cheval selon la revendication 3, dans lequel l'élément distinctif (18) comporte au moins quatre points caractéristiques non alignés, ces points caractéristiques ayant une position relative connue.

5. Procédé de modélisation d'un fer à cheval selon la revendication 4, **caractérisé en ce que** l'étape (11) de traitement de l'image brute (19) comporte une étape de détection de l'élément distinctif (18) du repère (17) et une étape de transformation de l'image brute (19) de façon à ce que les points caractéristiques de l'élément distinctif (18) aient une position prédéfinie sur l'image standardisée (20).

6. Procédé de modélisation d'un fer à cheval selon la revendication 5, **caractérisé en ce que** l'on applique à la partie de l'image brute (19) sur laquelle figure le sabot (16), la même transformation que celle appliquée au repère (17) sur l'image brute (19).

7. Procédé de modélisation d'un fer à cheval selon la revendication 1, **caractérisé en ce que** l'étape de détermination de coordonnées de points (23) sur le contour du sabot (16) comporte une étape de détermination de points extrêmes de la courbe.

8. Procédé de modélisation d'un fer à cheval selon l'une quelconque des revendications précédentes, **caractérisé en ce qu'**il comporte une étape de détermination de la position de trous prévus pour recevoir des clous de fixation du fer au sabot, cette position dépendant de la forme du contour du sabot (16)

9. Procédé de modélisation d'un fer à cheval selon l'une quelconque des revendications précédentes, **caractérisé en ce qu'**il comporte une étape de mesure de l'inclinaison de la paroi du sabot en au moins un endroit.

10. Procédé de modélisation d'un fer à cheval selon la revendication 9, **caractérisé en ce que** l'on utilise ladite inclinaison de la paroi du sabot pour adapter l'inclinaison d'au moins un pinçon du fer à cheval.

11. Procédé de modélisation d'un fer à cheval selon les revendications 8 et 9, **caractérisé en ce que** l'on utilise ladite inclinaison de la paroi du sabot pour adapter l'inclinaison des trous prévus pour les clous de fixation du fer au sabot.

12. Procédé de fabrication d'un fer à cheval sur mesure, ce procédé étant **caractérisé en ce qu'**il comporte les étapes suivantes :
- réception d'une image brute (19) comportant une vue de la face plantaire d'un sabot (16) de cheval auquel le fer à cheval sur mesure est destiné, ainsi qu'une vue d'un repère (17) placé contre cette face plantaire du sabot (16);
- traitement de l'image brute (19), ce traitement comportant les étapes suivantes :
• détection du repère (17) sur l'image brute (19) ;
• transformation de l'image brute (19) de façon à la modifier pour que le repère (17) ait une forme standardisée, l'image obtenue étant nommée image standardisée (20) ;
• segmentation de l'image standardisée (20) de façon à délimiter le contour du sabot (16), l'image obtenue étant nommée image segmentée (21) ;
• détermination de coordonnées de points d'un ensemble de points (23) sur une courbe (22) formant le contour du sabot ;
- choix d'un modèle (25) prédéfini de fer à cheval, ce modèle (25) comportant un ensemble de paramètres ;
- adaptation des paramètres du modèle (25) de fer à cheval choisi en fonction des coordonnées des points dudit ensemble de points (23) ;
- modélisation d'un fer à cheval (26) sur la base des paramètres du modèle (25) de fer à cheval choisi, adaptés selon les coordonnées des points dudit ensemble de points (23) ;
- fabrication d'un fer à cheval (26) selon la modélisation.

13. Procédé de fabrication d'un fer à cheval selon la revendication 1, **caractérisé en ce qu'**il comporte, avant l'étape de réception de l'image brute (19), une étape de mise en place du repère (17) contre la face plantaire du sabot (16) d'un cheval auquel est destiné le fer à cheval (26) et une étape (10) d'enregistrement d'une image du repère (17) et de cette face plantaire du sabot (16), de manière à obtenir ladite image brute (19).

14. Fer à cheval obtenu par la mise en oeuvre du procédé de fabrication selon les revendications 12 ou 13.
